# EUROPEAN PATENT SPECIFICATION

(11) **EP 0 834 343 B1**
(45) Date of publication and mention of the grant of the patent: **21.11.2001**
(21) Application number: 97117005.5
(22) Date of filing: 30.09.1997
(51) Int. Cl.: B01D 39/20, F01N 3/02, F01N 3/28

(54) **Exhaust gas purifying filter**
Filter zur Reinigung von Abgasen
Filtre pour la purification des gaz d'échappement

(30) Priority: 03.10.1996 JP 28339696; 12.09.1997 JP 26803397
(43) Date of publication of application: 08.04.1998
(73) Proprietor: KABUSHIKI KAISHA TOYOTA CHUO KENKYUSHO, Aichi-gun Aichi-ken, 480-11 (JP)
(72) Inventor: Asai, Mitsuru, c/o K.K. Toyota Chuo Kenkyusho, Aichi-gun, Aichi-ken (JP); Kamiya, Nobuo, c/o K.K. Toyota Chuo Kenkyusho, Aichi-gun, Aichi-ken (JP); Hohjo, Hiroshi, c/o K.K. Toyota Chuo Kenkyusho, Aichi-gun, Aichi-ken (JP); Yamamoto, Koichiro, c/o K.K. Toyota Chuo Kenkyusho, Aichi-gun, Aichi-ken (JP)
(74) Representative: Blumbach, Kramer & Partner GbR

(56) References cited:
- EP-A- 0 336 883
- EP-A- 0 404 385
- EP-A- 0 532 986
- EP-A- 0 630 677
- EP-A- 0 736 503
- DE-A- 3 541 372
- US-A- 4 464 185

## Description

The present invention relates to an exhaust gas purifying filter and more particularly, to a filter capable of adsorbing soot with a high efficiency and having high burning characteristics.

Soot is contained in a gas exhausted from an internal combustion engine such as a diesel engine. Methods of adsorbing the soot by the exhaust gas purifying filter and purifying it have been investigated.

As the exhaust gas purifying filter, a porous material consisting of cordierite, SiC, and the like and having a large number of through-pores formed therein is known. In a monolithic filter of wall flow type which purifies exhaust gas which passes through a partitioning wall, in the case that the diameters of through-pores are small when the exhaust gas passes through the filter, a pressure loss of the filter becomes greater, which may deteriorate the performance of the engine. On the other hand, in the case that the diameters of the through-pores are large, a part of the soot passes through the partitioning wall of the filter, which deteriorates the soot adsorbing efficiency.

In order to improve the soot adsorbing efficiency and decrease a pressure loss of the filter, an exhaust gas purifying filter is proposed as disclosed in Japanese Laid-Open Patent Publications Nos. 5-23512 and 5-139861. The diameters of pores of the porous material of these exhaust gas purifying filters are adjusted to be 1 to 15µm.

The document US-A 4,464,185 discloses an exhaust gas filter formed of a ceramic honeycomb structure and provided with a large number of passages defined in porous thin separator walls. The passages are composed of exhaust gas inlet passages and outlet passages which are alternately arranged. Partitioning walls having more than one layer, wherein the content of pores having a specified diameter is specifically indicated, are not disclosed by said document.

The document EP-A 0 532 986 discloses a two layer exhaust gas particle filter in modular form which may be regenerated by burning out the particles deposited therein. There is no disclosure of the pore diameter in each of the layers, except the statement that the larger pores have a size allowing the entrance of solid substances while the smaller pores have a size allowing the separation of solid substances.

However, the soot adsorbed by the exhaust gas purifying filters accumulates on the surface of the partitioning wall of the porous material of the filter. The accumulated soot is removed by burning it by an electric heater or a burner.

However, the ignition temperature and the burning temperature of the soot adsorbed by this method are high. Thus, the filter consisting of cordierite is partly melted or cracked. Therefore, the method of adsorbing the soot on the surface of the partitioning wall and burning the soot has not yet been adopted in a vehicle widely.

The present invention has been devised in view of the above-described problems. Accordingly, it is an object of the present invention to provide an exhaust gas purifying filter capable of adsorbing soot with a high efficiency and having high burning characteristics.

In order to achieve the object, there is provided an exhaust gas purifying filter comprising a porous material having large number of through-pores formed therein, the large number of through-pores comprising first through-pores of 5 to 20 µm in diameter the total pore volume of said first through-pores occupying 30 to 80% of the total volume of all throughpores of the porous material, and second through-pores of > 20 to 200µm in diameter, the total pore volume of the second through-pores occupying 20 to 70% of the total volume of all through-pores of the porous material, wherein the partitioning wall comprises a first layer positioned at an upstream chamber side and a second layer positioned at a downstream chamber side; the total volume of the second through-pores in the first layer occupying 60 % or more of the total volume of all through-pores of the first layer; and the total volume of the first through-pores in the second layer occupying 70 % or more of the total volume of all through-pores in the second layer.

The diameters of the through-pores formed in the porous material are in the above-described range. The diameters of the through-pores in this invention are greater than that of the through-pores formed in the conventional filter on the average. Therefore, when exhaust gas passes through the partitioning wall, soot contained therein is adsorbed not only on the surface of the partitioning wall but also by the through-pores formed in the inside of the partitioning wall. Consequently, the soot contacts the filter in a great area.

Because the soot is adsorbed in a wide area on the surface of the partitioning wall and by the through-pores formed in the inside of the partitioning wall, oxygen contained in the exhaust gas passing through the partitioning wall contacts the soot in a great area. Therefore, the soot adsorbed by the filter can be burnt at a lower temperature, compared with the soot adsorbed by the conventional filter. Further, because the ignition temperature of the soot is low, the soot can be burnt at a low temperature and without generating flame. Accordingly, the filter of the present invention improves the burning characteristic of the soot.

Further, because the partitioning wall of the filter has the above-described pore distribution, it serves as not only the burning place of the soot, but also a reaction place for purifying the exhaust gas from NOx.

If the diameters of through-pores are not distributed in the above-described range, i.e., if a large number of through-pores having small diameters is formed in the porous material, the soot accumulates on the surface of the partitioning wall, which prevents the soot from being adsorbed by the pores inside the wall. Consequently, the pressure loss of the filter becomes greater and the performance of an engine deteriorates.

On the other hand, if a large number of through-pores having large diameters is formed in the porous material, much soot is exhausted together with exhaust gas. As a result, the soot may be not adsorbed efficiently.

This and other objects, features and advantage of the present invention will become apparent upon reading of the following detailed description and drawings.
Fig. 1 is an explanatory view explaining an exhaust gas purifying filter according to embodiment 1 of the present invention;
Fig. 2 is a view showing a method of measuring a pressure loss of the exhaust gas purifying filter of embodiment 1;
Fig. 3 is a view showing the burning characteristic of the soot adsorbed by the exhaust gas purifying filter of embodiment 1 and a comparative example 1;
Fig. 4 is a view showing a adsorbed state of the soot adsorbed by the exhaust gas purifying filter of embodiment 1;
Fig. 5 is a view showing an adsorbed state of the soot adsorbed by the exhaust gas purifying filter of comparative example 1;
Fig. 6 is an explanatory view showing an exhaust gas purifying filter according to embodiment 2 of the present invention;
Fig. 7 is a view showing a method of measuring a pressure loss of an exhaust gas purifying filter, according to embodiment 4, installed on a vehicle;
Fig. 8 is an explanatory view showing the shape of a through-pore formed straight in a porous material of the exhaust gas purifying filter of the present invention;
Fig. 9 is an explanatory view showing the shape of a through-pore zigzag in the porous material of the exhaust gas purifying filter of the present invention;
Fig. 10 is an explanatory view showing the shape of a through-pore irregular in its diameter in the porous material of the exhaust gas purifying filter of the present invention;
Fig. 11 is an explanatory view showing the distribution of the pores in the porous materials of embodiments 1, 5, and 6 and comparative examples 2 and 3; and
Fig. 12 is a diagram showing the distribution of the pores in the porous materials of embodiment 1 and comparative example 1.

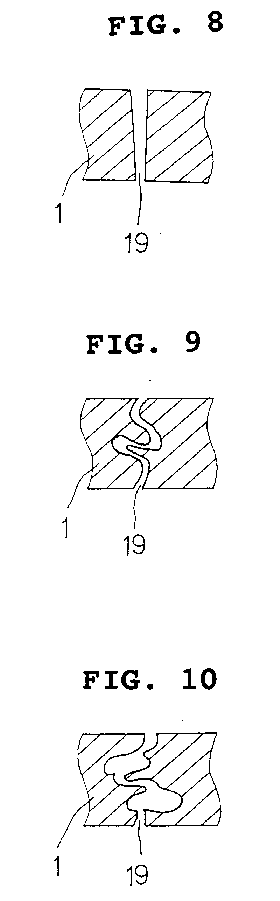

The through-pores formed in an exhaust gas purifying filter 1 comprising a porous material may have various shapes shown in Figs. 8, 9, and 10. For example, the through-pore 19 shown in Fig. 8 is uniform almost in the diameter thereof and extends almost straight. The through-pore 19 shown in Fig. 9 is uniform almost in the diameter thereof and zigzag. The through-pore 19 shown in Fig. 10 is irregular in its diameter.

The diameter of the through-pore is measured by mercury porosimetry.

It is preferable that the porous material is honeycomb-shaped.

In the exhaust gas purifying filter of the present invention, a porous material is used as a partitioning wall for allowing exhaust gas to pass therethrough.

The diameters of the through-pores of the porous material are not limited to the range of 5 to 20µm and 20 to 200µm. Through-pores having diameters other than the above-described ranges may also be formed in the porous material.

It is preferable that the total volume of through-pores having diameters smaller than 5µm or greater than 200µm is 20% or less of the total volume of all through-pores. The porous material having through-pores whose diameters are in this range adsorbs soot at a high efficiency and is allowed to have an improved soot-burning characteristic.

If the total volume of through-pores having diameters smaller than 5µm or greater than 200µm is more than 20% of the total volume of all through-pores, the porous material adsorbs the soot at a low efficiency and is not allowed to have an improved soot-burning characteristic.

The partitioning wall is divided into two layers, namely, a porous material of upstream side (first layer) and a porous material of downstream side (second layer). According to the invention the total volume of through-pores of the first layer, having diameters in the range of 20 to 200µm is set to 60% or more of the total volume of all through-pores of the first layer. According to the invention the total volume of through-pores, of the second layer having diameters in the range of 5 to 20µm is set to 70% or more of the total volume of all through-pores of the second layer.

In the distribution of the through-pores of the entire partitioning wall, the total volume of through-pores having diameters in the range of 5 to 20µm is in a range of 30 to 80% of the total volume of all through-pores of the porous material; and the total volume of through-pores having diameters in the range of 20 to 200µm is in a range of 20 to 70% of the total volume of all the through-pores of the porous material.

According to the above-described way of distribution of the through-pores, the diameters of the through-pores of the porous material at the upstream side are great, whereas the diameters of the through-pores of the porous material at the downstream side are small. This construction allows the soot to be adsorbed by the partitioning wall at the upstream side in which large-diameter through-pores are formed, thus improving the soot adsorbing efficiency and the burning characteristic of the adsorbed soot.

It is preferable that the thickness of the first layer is set to 20 to 98% of the entire thickness of the partitioning wall and that the thickness of the second layer is set to 2 to 80% of the entire thickness thereof. If the thickness of the first layer is less than 20% of the entire thickness of the partitioning wall or if the thickness of the second layer is more than 80% of the entire thickness thereof, the soot accumulates on the surface of the partitioning wall, thus clogging the pores. Consequently, the burning efficiency of the soot may deteriorate. If the thickness of the first layer is more than 98% of the entire thickness of the partitioning wall or if the thickness of the second layer is less than 2% of the entire thickness thereof, the soot passes through the partitioning wall at a high percentage. Consequently, the soot adsorbing efficiency may deteriorate.

If the total volume of through-pores having diameters in the range of 20 to 200µm is less than 60% of the total volume of all through-pores of the first layer, a large number of through-pores have diameters in the range of less than 20µm or more than 200µm. If a large number of through-pores having diameters less than 20µm are formed in the first layer, the soot may accumulate on the surface of the partitioning wall. Consequently, the degree of the pressure loss of the filter increases and the burning characteristic of the soot may deteriorate. If a large number of through-pores having diameters more than 200µm is formed in the first layer, the burning characteristic of the soot may deteriorate.

If in the second layer, the total volume of through-pores having diameters in the range of 5 to 20µm is less than 70% of the total volume of all through-pores of the second layer, more through-pores have diameters in the range of less than 5µm or more than 20µm. If a large number of through-pores having diameters less than 5µm is formed in the second layer, the degree of the pressure loss of the filter may increase. If a large number of through-pores having diameters more than 20µm is formed in the second layer, the soot adsorbing efficiency may deteriorate.

It is preferable to provide a heat conduction control substance with the surface of the porous material and the surface of the through-pores to improve the heat conductivity thereof. Consequently, the burning efficiency of the soot can be improved. It is preferable that the heat conduction control substance has a higher heat conductivity than the substance of the porous material to improve the burning efficiency of the soot. As the heat conduction control substance, SiC, AlN, Al₂O₃, BeO and the like can be used.

It is preferable that the porous material and the through-pores carry catalyst on the surface thereof to improve the burning characteristic of the soot. As the catalyst, a combination of a noble metal and an oxide can be used. As the noble metal, palladium (Pd), platinum (Pt), rhodium (Rh) and the like can be used. As the oxide, cerium oxide, praseodymium oxide, samarium oxide and the like can be used. It is possible to use a nonstoichiometric oxide consisting of cerium oxide, praseodymium oxide, samarium oxide from which oxygen has been partially removed or alternatively a solid solution of other elements.

The above-described catalyst may be directly carried on the surface of the porous material made of cordierite or SiC or directly on the wall surfaces of the through-pores. It is also possible to coat the surface of the porous material and wall surfaces of the through-pores with powder of an oxide such as Al₂O₃, SiO₂, TiO₂ or ZrO₂ and then apply the catalyst to the powder of the oxide. It is also possible to apply a mixture of the powder of the catalyst and the powder of Al₂O₃, SiO₂, TiO₂ or ZnO₂ to the surface of the porous material.

The heat conduction control substance may be applied to the surface of the partitioning wall (porous material) of the filter and the wall surfaces of the through-pores, and then the catalyst may be carried on the heat conduction control substance. It is also possible to apply a mixture of the heat conduction control substance and/or the catalyst and oxide powder to the surface of the porous material.

### Examples

In the following, the invention is explained referring to embodiments and comparative examples, wherein only embodiment 2 includes the two-layer stucture of claim 1.

### EMBODIMENT 1 and COMPARATIVE EXAMPLE 1

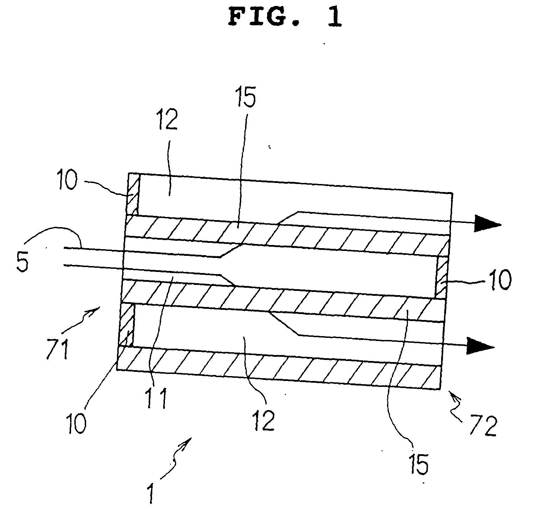

An exhaust gas purifying filter according to an embodiment of the present invention is described below with reference to Figs. 1 through 5.

As shown in Fig. 1, in an exhaust gas purifying filter 1 (hereinafter referred to as filter 1) of embodiment 1, an upstream chamber 11 and a downstream chamber 12 are partitioned from each other by a partitioning wall 15 made of a porous material with many pores. In order to purify an exhaust gas 5, the exhaust gas 5 introduced into the upstream chamber 11 passes through the partitioning wall 15, thus being flowing into the downstream chamber 12.

The cylindrical filter 1 has a diameter of 30mm and a length of 50mm and comprises a plurality of honeycomb-shaped cells in the lengthwise direction of the filter 1. Each cell is open at its one end. One of the cells composes the upstream chamber 11 open at an inlet 71 of the filter 1, whereas the outlet 72 of the upstream chamber 11 is sealed with a sealer 10. The other cells compose the downstream chambers 12 open at the outlet 72 thereof, and the inlet 71 of each downstream chamber 12 is sealed with the sealer 10.

The upstream chamber 11 and the downstream chamber 12 are adjacent to each other through the partitioning wall 15. The exhaust gas 5 is introduced into the upstream chamber 11, thus passing through the partitioning wall 15. At this time, soot contained in the exhaust gas 5 is adsorbed by the partitioning wall 15.

As a result, the soot contained in the exhaust gas 5 is purified. Then, the purified exhaust gas 5 flows into the downstream chamber 12 and is exhausted from the outlet 72.

The method of manufacturing the filter 1 will be described below.

First, in order to allow a molded product to have the composition of cordierite, kaolin, talc, and alumina were mixed with each other in a ball-mill at a predetermined mixing ratio for 12 hours to obtain 49wt% of powdery mixture. The particle diameters of these substances were 1µm or less. Then, 13wt% of binder (trade name: Celander), 20wt% of graphite powder (diameter: 50 to 300µm) serving as a pore-forming material, and 18wt% of water were added to the mixture. The resulting mixture was kneaded.

Then, a honeycomb-shaped product having a diameter of 35mm and a length of 55mm was obtained by extrusion molding.

After binder-removal, the product was sintered in the atmosphere at 1440°C for two hours, and the end of each cell was sealed with a sealer. Then the product is subjected to heat treatment. As a result, a filter comprising a cordierite porous material having a large number of pores was obtained.

A filter of comparative example 1 comprising a porous material having pores whose diameters were all less than 30µm was manufactured in the same manner as embodiment 1 except that 20wt% of graphite powder having diameters of 10 to 30µm was additionally used as a pore-forming material.

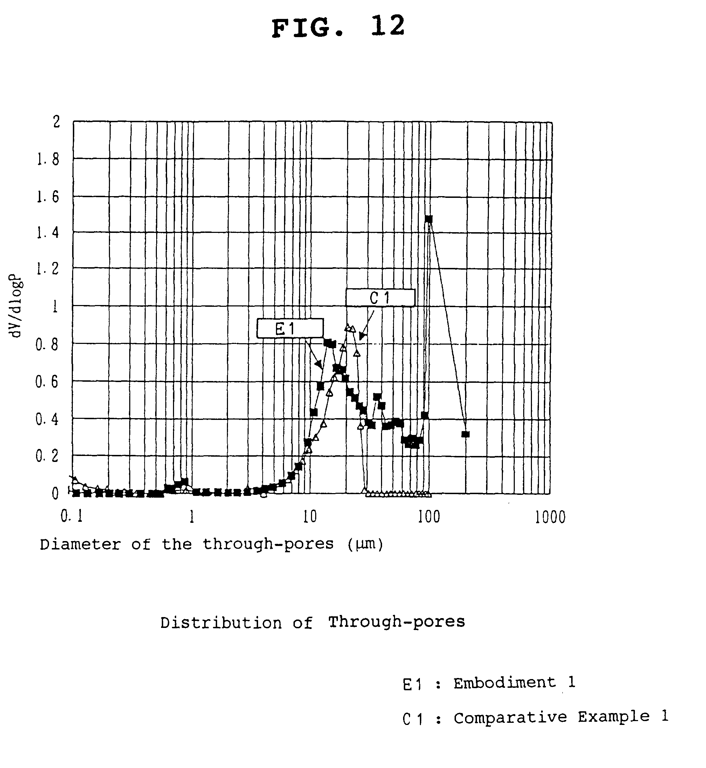

Thereafter, the diameters of the pores of the porous material of embodiment 1 and comparative example 1 were measured by the mercury porosimetory. The result is shown in Fig. 12.

As indicated in Fig. 12, in the distribution of the through-pores of the filter of embodiment 1, the total volume of through-pores having diameters in the range of 5 to 20µm was 40% of the total volume of all through-pores of the porous material. The total volume of through-pores having diameters in the range of 20 to 200µm was 50% of the total volume of all the through-pores of the porous material. The total volume of through-pores having diameters less than 5µm or more than 200µm was 10% of the total volume of all through-pores of the porous material.

In the distribution of the through-pores of the filter of comparative example 1, through-pores having diameters greater than 30µm were not present in the porous material, and the average of all the through-pores of the filter of comparative example 1 was 15µm.

The burning characteristics of soot adsorbed by the filter 1 of embodiment 1 and the filter of comparative example 1 were evaluated.

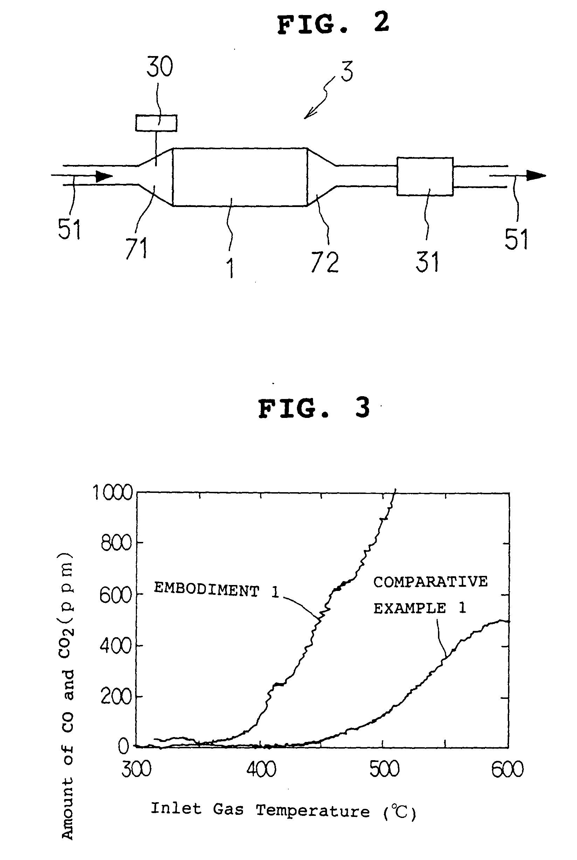

As shown in Fig. 2, the burning characteristics of the soot were measured by a soot burning testing device 3. After the filter 1 adsorbed soot generated by the burning of light oil, air 51 was introduced into the filter 1 from the inlet 71 while the temperature of the air 51 was being raised and exhausted from the outlet 72. The temperature of the air 51 was measured by a thermometer 30 installed at the inlet 71. A detector 31 for detecting the presence of CO and CO₂ was installed at the outlet 72. The burning characteristics of the soot were evaluated according to the amount of the CO and CO₂ generated by the burning of the soot. Supposing that the total amount of the generated CO and CO₂ was 5ppm, the ignition temperature of the soot was 380°C.

The result of the measurement of the burning characteristics of the soot is shown in Fig. 3.

As indicated in Fig. 3, the soot adsorbed by the filter 1 of embodiment 1 started to burn at 380°C.

The soot adsorbed by the filter of comparative example 1 started to burn at 480°C.

The result indicates that the burning temperature of the soot adsorbed by the filter of embodiment 1 is lower by about 100°C than that of the soot adsorbed by the filter of comparative example 1.

Then, the burning speeds of the soot adsorbed by the filters of embodiment 1 and comparative example 1 were measured. In measuring the burning speed of the soot, after the same amount of soot was adsorbed by the filters of embodiment 1 and comparative example 1, the air 51 was introduced into each filter from the inlet 71 while the temperature of the air 51 was being raised. In order to examine the burning speed of the soot, the time when the total amount of the generated CO and CO₂ became 400ppm in relation to the time when the soot started to burn thereof was measured.

The result was that the soot adsorbed by the filter of embodiment 1 was burnt about twice as fast as that adsorbed by the filter of comparative example 1.

The state of the soot adsorbed by both filters were examined by observing the sections thereof.

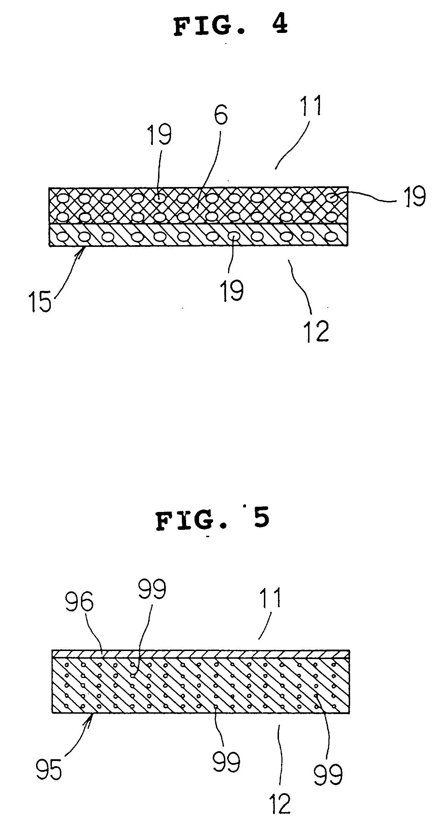

The result was that as shown in Fig. 4, in the case of the filter 1 of embodiment 1, the soot 6 was adsorbed not only on the surface of the partitioning wall 15 of the filter 1 but also in the interior of through-pores 19 formed through the partitioning wall 15. In particular, a large amount of the soot 6 was adsorbed in the through-pores 19 positioned proximate to the upstream chamber 11, as shown by oblique cross lines of Fig. 4.

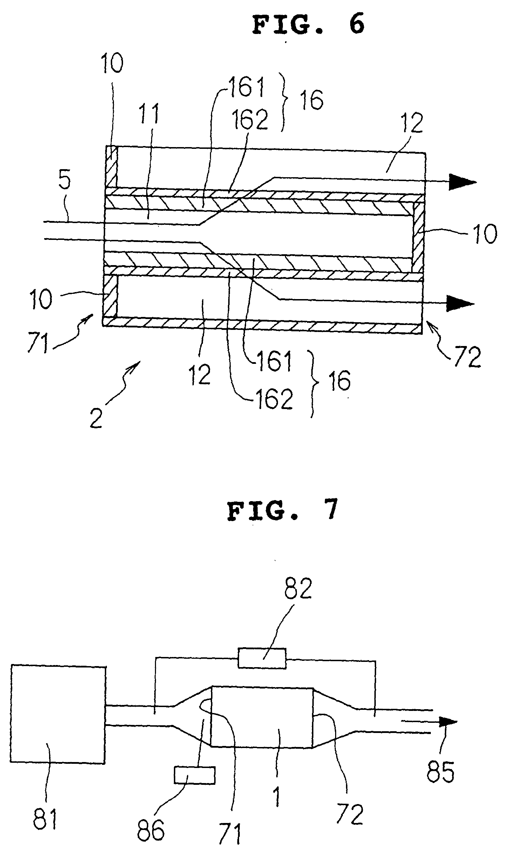

In the case of the filter 1 of comparative example 1, as shown by the right oblique lines in Fig. 5, soot 96 was adsorbed by the partitioning wall 95 only on its surface positioned alongside of the upstream chamber 11 and no soot 96 was adsorbed in the interior of through-pores 99.

The soot adsorbing efficiencies of the filters of embodiment 1 and comparative example 1 were measured.

The soot adsorbing efficiency was measured by a smoke meter installed at the downstream side of the filter.

The result was that the soot adsorbing efficiency of the filter of embodiment 1 was 95%, whereas that of the filter of comparative example 1 was 98%. The difference of 3% in the adsorbing efficiency between embodiment 1 and comparative example 1 was so slight that any problems do not occur in the use of the filter 1.

The pressure loss of each filter of embodiment 1 and comparative example 1 was measured.

In measuring the pressure loss of each filter, a pressure gauge was installed at the inlet and the outlet of each filter. Air containing soot was introduced into the filter to measure the air pressure by both pressure gauges. In order to measure the pressure loss, the relative pressure difference, namely, the air pressure at the outlet relative to the air pressure at the inlet was calculated.

The result was that the pressure loss of the filter of embodiment 1 was lower than that of comparative example 1 by about 20%. Thus, the filter of embodiment 1 is useful in use.

### EMBODIMENT 2

As shown in Fig. 6, the filter 2 of embodiment 2 has a two-layer structure. That is, a partitioning wall 16 of the filter is composed of an upstream part 161 confronting the upstream chamber 11 and a downstream part 162 confronting the downstream chamber 12.

In the distribution of the through-pores in the upstream part 161, the total volume of through-pores having diameters in the range of 20 to 200µm was 90% of the total volume of all through-pores of the porous material (first layer) of the filter. In the distribution of the through-pores in the downstream part 162, the total volume of through-pores having diameters in the range of 5 to 20µm was 90% of the total volume of all through-pores of the porous material (second layer) of the filter.

The method of manufacturing the filter will be described below.

Initially, a honeycomb-shaped cordierite porous material was obtained in the same manner as embodiment 1 except that the diameters of particles of graphite as a pore-forming material were 5 to 30µm.

Then, the porous material was dipped in slurry, and the slurry was attached to the downstream part 162 of the porous material. The slurry was prepared as follows: 0.85wt% of polycarboxyl ammonium serving as dispersant, 20wt% of graphite powder (particle diameter: 20 to 300 µm) serving as a pore-forming material, and 25wt% of water was added to 50.65wt% of cordierite whose particle diameter was 0.5µm. The contents were kneaded for dispersing the contents for 12 hours by a ball mill. Thereafter, 3.5wt% of polyvinyl alcohol (PVA) serving as hardening resin was added to the solution. Then, the contents were kneaded for dispersing the contents therein to prepare the slurry.

Then, the slurry attached to the downstream part 162 of the porous material was dried and the binder removed.

Then, the porous material was sintered at 1400°Cfor two hours in the atmosphere. As a result, as shown in Fig. 6, the filter 2 having a two-layer structure was manufactured. That is, the filter 2 had the upstream part 161 having through-pores whose diameters were in the range of 20 to 200 µm and the downstream part 162 having through-pores whose diameters were in the range of 5 to 20µm.

The burning characteristic of soot was evaluated by the same method as that described in embodiment 1. Most of soot was adsorbed by the upstream part 161 having the larger pores (diameters: 20 to 200µm). The ignition temperature of the soot adsorbed by the filter 2 was as low as 380°C. The burning speed of the soot adsorbed by the filter 2 was about twice as fast as that of the soot adsorbed by the filter of comparative example 1.

The pressure loss of the filter 2 of embodiment 2 was almost the same as that of the filter 1 of embodiment 1. The soot adsorbing efficiency of the filter 2 of embodiment 2 was also almost the same as that of the filter of comparative example 1.

### EMBODIMENT 3

The filter of embodiment 3 is the same as that of embodiment 1 except that catalyst was carried on the surface of the partitioning wall and through-pores.

As the catalyst, a cerium oxide was used. In manufacturing the filter of embodiment 3, initially, honeycomb-shaped cordierite porous material was obtained by a method similar to that of embodiment 1. Then, the porous material was dipped in a solution of a cerium oxide nitrate. Thereafter, the porous material was dried at 500°C for two hours in the atmosphere to precipitate solid a cerium oxide on the surface of the partitioning wall partitioning the filter into the upstream chamber and the downstream chamber and the interiors of the through-pores. The amount of the a cerium oxide carried on the surface of the partitioning wall and the pores was 10% of the weight of the filter.

The burning characteristics of the soot adsorbed by the filter carrying the a cerium oxide was evaluated by a method similar to that of embodiment 1. As a result, the ignition temperature of the soot adsorbed by the filter carrying the a cerium oxide thereon was 350°C, whereas the ignition temperature of the soot adsorbed by the filter 1 of embodiment 1 not carrying the a cerium oxide thereon was 380°C.

That is, the soot adsorbed by the filter carrying the a cerium oxide thereon is ignited at a temperature lower by 30°C than the soot adsorbed by the filter not carrying the a cerium oxide thereon.

This effect can be also obtained when powder prepared from a cerium oxide is applied to the porous material of the filter.

The burning characteristic of the soot adsorbed by the filter carrying palladium or platinum thereon in addition to the a cerium oxide was evaluated. The result was that the ignition temperature of the soot adsorbed by such a filter was as low as 320 to 330°C.

This indicates that the soot adsorbed by the filter carrying the a cerium oxide and palladium, or platinum thereon is allowed to have an improved burning characteristic.

### EMBODIMENT 4

In embodiment 4, the filter was installed on a vehicle to measure a soot-adsorbed state and the change in the load to be applied to the engine thereof under the condition of practical use.

The filter of embodiment 4 was manufactured by a method similar to that of embodiment 1. The outer diameter of the filter was 140mm and its length was 150mm. As shown in Fig. 7, the filter 1 was installed in the rear of a diesel engine 81. A pressure gauge 82 was installed at the inlet 71 of the filter and the outlet 72 thereof. A thermometer 86 was mounted on the inlet 71. The burning characteristic of the soot adsorbed by the filter was measured by changing the load to be applied to the diesel engine 81.

The result was as follows. When a light loading was applied to the diesel engine 81 and the temperature of exhaust gas was low, soot was adsorbed by the filter, and the pressure loss of the filter was great. When a heavy loading was applied thereto and the temperature of the exhaust gas become high, the soot adsorbed by the filter started to burn and the pressure loss thereof became constant. This is because the amount of the soot exhausted from the diesel engine 81 became equal to the burning amount of the soot adsorbed by the filter. The temperature at the inlet 71 was 430°C when the pressure loss became constant.

The burning characteristic of the soot adsorbed by the filter of comparative example 1 having through-pores whose diameters were 1 to 30µm was measured by a method similar to that of embodiment 4. The result was that when the pressure loss of the filter became constant, the temperature of the inlet of the filter was 520°C.

That is, the soot adsorbed by the filter of embodiment 4 started to burn at the temperature lower by about 90°C than that adsorbed by the filter of comparative example 1. Therefore, the filter of embodiment 4 has an improved burning characteristic.

### EMBODIMENT 5

In manufacturing the filter of embodiment 5, in order to allow a molded product to have the composition of the cordierite, kaolin, talc, and alumina were mixed with each other at a predetermined mixing ratio to obtain 49wt% of powdery mixture. Then, 13wt% of binder (trade name: Celander), 15wt% of graphite powder (diameter: 50 to 200µm), 5wt% of graphite powder (diameter: 200 to 300µm), and 18wt% of water were added to the mixture and kneaded. Thereafter, a porous material was obtained by a method similar to that of embodiment 1.

In the distribution of the through-pores of the filter of embodiment 5, the total volume of through-pores having diameters in the range of 5 to 20µm was 70% of the total volume of all through-pores of the porous material. The total volume of through-pores having diameters in the range of 20 to 200µm was 25% of the total volume of all through-pores of the porous material. The total volume of through-pores having diameters less than 5µm or more than 200µm was 5% of the total volume of all through-pores of the porous material.

The burning characteristic of the filter of embodiment 5 was measured by a method similar to that of embodiment 1.

The ignition temperature of the filter of embodiment 5 was 400°C, and the soot adsorbing efficiency was 95%.

### EMBODIMENT 6

In manufacturing the filter of embodiment 6, a porous material was obtained in the same manner as embodiment 1 except that 5wt% of graphite powder (diameter: 50 to 200µm) and 15wt% of graphite powder (diameter: 200 to 300µm) were used as the pore-forming material.

In the distribution of the through-pores of the filter of embodiment 6, the total volume of through-pores having diameters in the range of 5 to 20µm was 35% of the total volume of all through-pores of the porous material. The total volume of through-pores having diameters in the range of 20 to 200µm was 60% of the total volume of all through-pores of the porous material. The total volume of through-pores having diameters less than 5µm or more than 200µm was 5% of the total volume of all through-pores of the porous material.

The burning characteristic of the soot adsorbed by filter of embodiment 6 was measured by a method similar to that of embodiment 1.

The soot ignition temperature of the filter of embodiment 6 was 380°C, and the soot adsorbing efficiency was 93%.

### COMPARATIVE EXAMPLE 2

In manufacturing the filter of comparative example 2, a porous material was obtained in the same manner as embodiment 1 except that 2wt% of graphite powder (diameter: 50 to 200µm) and 18wt% of graphite powder (diameter: 200 to 300µm) were used.

In the distribution of the through-pores of the filter of comparative example 2, the total volume of through-pores having diameters in the range of 5 to 20µm was 20% of the total volume of all through-pores of the porous material. The total volume of through-pores having diameters in the range of 20 to 200µm was 70% of the total volume of all through-pores of the porous material. The total volume of through-pores having diameters less than 5µm or more than 200µm was 10% of the total volume of all through-pores of the porous material.

The burning characteristic of the filter of comparative example 2 was measured by a method similar to that of embodiment 1.

The soot ignition temperature of the filter of comparative example 2 was 440°C, and the soot adsorbing efficiency was 80%.

### COMPARATIVE EXAMPLE 3

In manufacturing the filter of comparative example 3, a porous material was obtained in the same manner as embodiment 1 except that 18wt% of graphite powder (diameter: 50 to 200µm) and 2wt% of graphite powder (diameter: 200 to 300µm) were used.

In the distribution of the through-pores of the filter of comparative example 3, the total volume of through-pores having diameters in the range of 5 to 20µm was 85% of the total volume of all through-pores of the porous material. The total volume of through-pores having diameters in the range of 20 to 200µm was 10% of the total volume of all through-pores of the porous material. The total volume of through-pores having diameters less than 5µm or more than 200µm was 5% of the total volume of all through-pores of the porous material.

The burning characteristic of the filter of comparative example 3 was measured by a method similar to that of embodiment 1.

The soot ignition temperature of the filter of comparative example 3 was 470°C, and the soot adsorbing efficiency'was 95%.

Table 1 shows the soot adsorbing and the soot burning characteristics of the filters (embodiments 1, 5, and 6 and comparative examples 1 through 3).

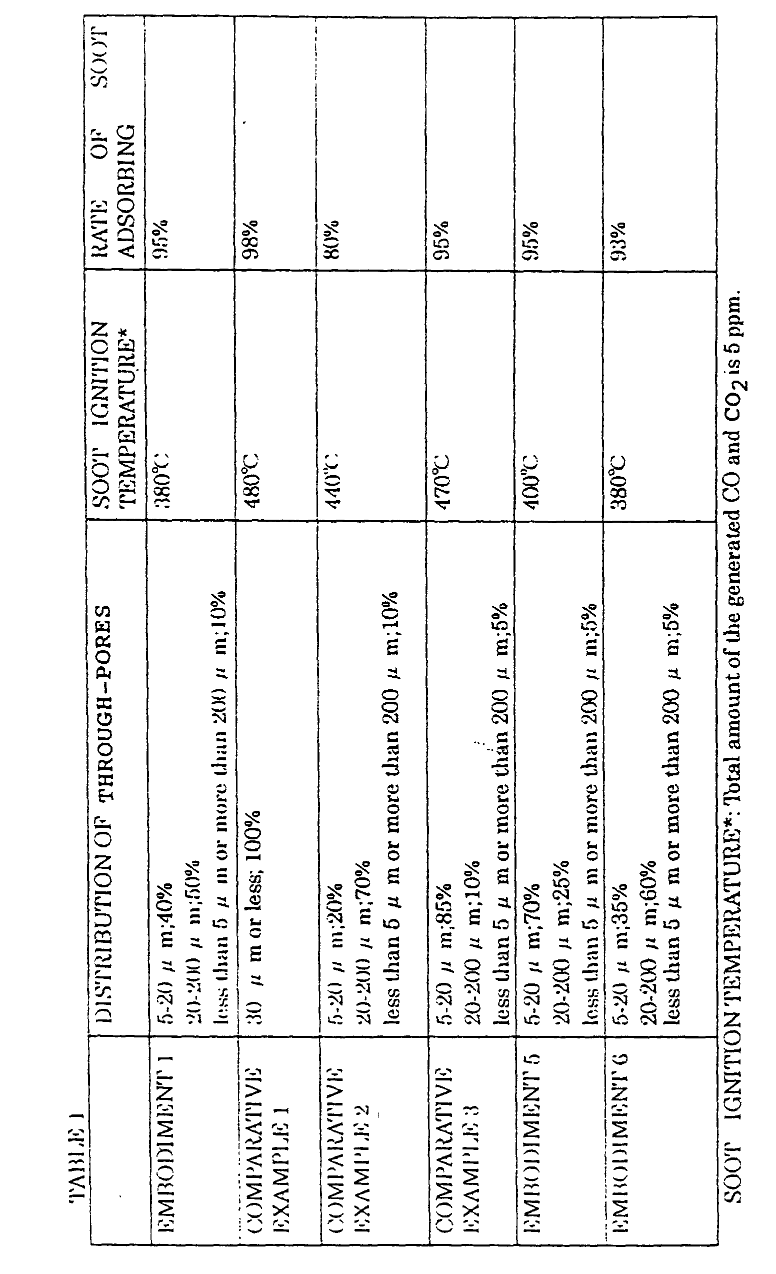

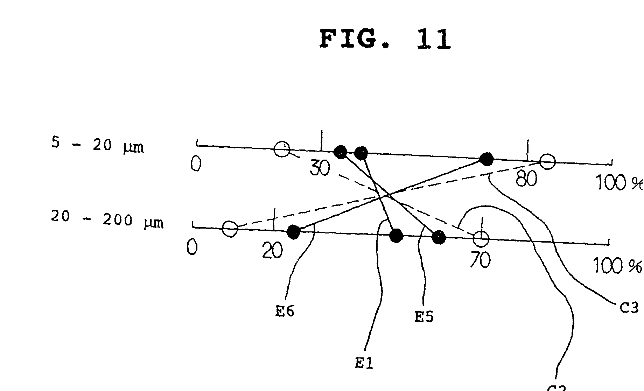

Fig. 11 shows the distribution of through-pores of the respective filters.

The table 1 and Fig. 11 indicate that the ignition temperature of soot is low and the soot is adsorbed at a high percentage when the total volume of through-pores having diameters in the range of 5 to 20µm is in the range of 30 to 80% of the total volume of all through-pores of the porous material and when the total volume of through-pores having diameters in the range of 20 to 200µm is in the range of 20 to 70% of the total volume of all the through-pores of the porous material.

While the invention has been described with reference to embodiments, it is to be understood that modification or variations may be easily made by a person of ordinary skill in the art without departing from the scope of the invention which is defined by the appended claims.

## Claims

1. An exhaust gas purifying filter comprising a porous material disposed as a partitioning wall for allowing an exhaust gas to pass therethrough, said material having a large number of through-pores formed therein, said large number of through-pores comprising first through-pores of 5 to 20 *µ*m in diameter, the total pore volume of said first through-pores occupying 30 to 80 % of the total volume of all through-pores of the porous material, and second through-pores of >20 to 200 *µ*m in diameter, the total pore volume of said second through-pores occupying 20 to 70 % of the total volume of all through-pores of the porous material, wherein the partitioning wall comprises a first layer positioned at an upstream chamber side and a second layer positioned at a downstream chamber side; the total volume of the second through-pores in the first layer occupying 60 % or more of the total volume of all through-pores of the first layer; and the total volume of the first through-pores in the second layer occupying 70 % or more of the total volume of all through pores of the second layer.

2. The exhaust gas purifying filter according to claim 1, wherein the large number of through-pores further comprises third through-pores of a diameter of smaller than 5 *µ*m or larger than 200 *µ*m, the total volume of such third through-pores occupying 20 % or less of the total volume of all through-pores of the porous material.

3. The exhaust gas purifying filter according to claim 1 or claim 2, wherein the thickness of the first layer occupies 20 to 98 % of the entire thickness of the partitioning wall, and the thickness of the second layer occupies 2 to 80 % of the entire thickness of the partitioning wall.

4. The exhaust gas purifying filter according to any of the claims 1 to 3, wherein the surface of the porous material and the wall surfaces of the through-pores are provided with a heat conduction control substance for improving the heat conductivity of the porous material.

5. The exhaust gas purifying filter according to claim 4, wherein said heat conduction control substance is at least one selected from the group consisting of SiC, AlN, Al₂O₃ and BeO.

6. The exhaust gas purifying filter according to any of the claims 1 to 5, wherein the surface of the porous material and the wall surfaces of the through-pores are provided with a catalyst.

7. The exhaust gas purifying filter according to claim 6, wherein said catalyst is a combination of at least one noble metal selected from the group consisting of palladium, platinum and rhodium and at least one oxide catalyst selected from the group consisting of a cerium oxide, a samarium oxide and a praseodymium oxide.

## Patentansprüche

1. Abgasreinigungsfilter mit einem porösen Material, das als eine Trennungswand zum Ermöglichen eines Durchgangs eines Abgases durch diese angeordnet ist,
wobei das Material eine große Anzahl von Durchgangsporen, die darin ausgebildet sind, aufweist, wobei die große Anzahl der Durchgangsporen
erste Durchgangsporen mit 5 bis 20 µm im Durchmesser, deren Gesamtporenvolumen 30 bis 80 % des Gesamtvolumens aller Durchgangsporen des porösen Materials einnimmt, und zweite Durchgangsporen von > 20 bis 200 µm im Durchmesser, deren Gesamtvolumen 20 bis 70 % des Gesamtvolumens aller Durchgangsporen des porösen Materials einnimmt, aufweist,
bei dem die Trennwand eine erste Schicht, die an einer stromaufwärts gelegenen Kammerseite positioniert ist, und eine zweite Schicht, die an einer stromabwärts gelegenen Kammerseite positioniert ist, aufweist,
das Gesamtvolumen der zweiten Durchgangsporen in der ersten Schicht 60 % oder mehr des Gesamtvolumens aller Durchgangsporen der ersten Schicht einnimmt, und
das Gesamtvolumen der ersten Durchgangsporen in der zweiten Schicht 70 % oder mehr des Gesamtvolumens aller Durchgangsporen in der zweiten Schicht einnimmt.

2. Abgasreinigungsfilter nach Anspruch 1, bei dem
die große Anzahl von Durchgangsporen weiter dritte Durchgangsporen eines Durchmessers kleiner als 5 µm oder größer als 200 um aufweist, deren Gesamtvolumen 20 % oder weniger des Gesamtvolumens aller Durchgangsporen des porösen Materials einnimmt.

3. Abgasreinigungsfilter nach Anspruch 1 oder 2, bei dem
die Dicke der ersten Schicht 20 bis 98 % der gesamten Dicke der Trennwand einnimmt, und die Dicke der zweiten Schicht, 2 bis 80 % der gesamten Dicke der Trennwand einnimmt.

4. Abgasreinigungsfilter nach einem der Ansprüche 1 bis 3, bei dem die Oberfläche des porösen Materials und die Wandoberflächen der Durchgangsporen mit einer Wärmeleitungsteuersubstanz zum Verbessern der Wärmeleitfähigkeit des porösen Materials vorgesehen sind.

5. Abgasreinigungsfilter nach Anspruch 4, bei dem
die Wärmeleitungssteuersubstanz mindestens eine Substanz ist, die aus der Gruppe ausgewählt ist, die aus SiC, AIN, Al₂O₃ und BeO besteht.

6. Abgasreinigungsfilter nach einem der Ansprüche 1 bis 5, bei dem
die Oberfläche des porösen Materials und die Wandoberflächen der Durchgangsporen mit einem Katalysator vorgesehen sind.

7. Abgasreinigungsfilter nach Anspruch 6, bei dem
der Katalysator eine Kombination aus mindestens einem Edelmetall, das aus der Gruppe ausgewählt ist, die aus Palladium, Platin und Rhodium besteht, und mindestens einen Oxidkatalysator, der aus der Gruppe ausgewählt ist, die aus Zeroxid, Samariumoxid und Praseodymoxid besteht, ist.

## Revendications

1. Filtre de purification des gaz d'échappement, comprenant un matériau poreux disposé sous forme d'une cloison pour permettre à un gaz d'échappement de le traverser, un grand nombre de pores traversants étant formés à l'intérieur dudit matériau, ledit grand nombre de pores traversants comprenant des premiers pores traversants de 5 à 20 µm de diamètre, le volume total desdits premiers pores traversants occupant de 30 à 80 % du volume total de l'ensemble des pores traversants du matériau poreux, et des deuxièmes pores traversants, ayant un diamètre > 20 et allant jusqu'à 200 µm, le volume total des pores desdits deuxièmes pores traversants occupant de 20 à 70 % du volume total de l'ensemble des pores traversants du matériau poreux, dans lequel la cloison comprend une première couche, disposée sur un côté chambre amont, et une deuxième couche disposée sur un côté chambre aval ; le volume total des deuxièmes pores traversants de la première couche occupant 60 % ou plus du volume total de l'ensemble des pores traversants de la première couche ; et le volume total des premiers pores traversants de la deuxième couche occupant 70 % ou plus du volume total de l'ensemble des pores traversants de la deuxième couche.

2. Filtre de purification des gaz d'échappement selon la revendication 1, dans lequel le grand nombre de pores traversants comprend en outre des troisièmes pores traversants ayant un diamètre inférieur à 5 µm ou supérieur à 200 µm, le volume total de ces troisièmes pores traversants occupant 20 % ou moins du volume total de l'ensemble des pores traversants du matériau poreux.

3. Filtre de purification des gaz d'échappement selon la revendication 1 ou 2, dans lequel l'épaisseur de la première couche occupe de 20 à 98 % de l'épaisseur totale de la cloison, et l'épaisseur de la deuxième couche occupe de 20 à 80 % de l'épaisseur totale de la cloison.

4. Filtre de purification des gaz d'échappement selon l'une quelconque des revendications 1 à 3, dans lequel la surface du matériau poreux et les surfaces de paroi des pores traversants sont pourvus d'une substance régulatrice de la conduction thermique, pour améliorer la conductivité thermique du matériau poreux.

5. Filtre de purification des gaz d'échappement selon la revendication 4, dans lequel ladite substance régulatrice de la conduction thermique est au moins une substance choisie dans l'ensemble comprenant SiC, AlN, Al₂O₃ et BeO.

6. Filtre de purification des gaz d'échappement selon l'une quelconque des revendications 1 à 5, dans lequel la surface du matériau poreux et les surfaces de paroi des trous traversants sont pourvus d'un catalyseur.

7. Filtre de purification des gaz d'échappement selon la revendication 6, dans lequel ledit catalyseur est une combinaison d'au moins un métal précieux choisi dans l'ensemble comprenant le palladium, le platine et le rhodium, et d'au moins un catalyseur à base d'un oxyde, choisi dans le groupe comprenant un oxyde de cérium, un oxyde de samarium et un oxyde de praséodyme.
